# EUROPEAN PATENT SPECIFICATION

(11) **EP 3 831 656 B1**
(45) Date of publication and mention of the grant of the patent: **22.02.2023**
(21) Application number: 19214237.0
(22) Date of filing: 06.12.2019
(51) Int. Cl.: B60R 7/04, B60Q 3/252

(54) **A VEHICLE SYSTEM TO FACILITATE COSMETIC CARE**
FAHRZEUGSYSTEM ZUR ERLEICHTERUNG DER KOSMETISCHENPFLEGE
UN SYSTEME POUR FACILITER LES SOINS COSMETIQUES DANS UN VEHICULE

(43) Date of publication of application: 09.06.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: SHARIATZADEH, Pardis, 421 70 VÄSTRA FRÖLUNDA (SE); PIHLSGÅRD, Måns, 411 29 GÖTEBORG (SE); NILSSON, Magnus, 448 37 FLODA (SE)
(74) Representative: Zacco Sweden AB

(56) References cited:
- CN-A- 105 329 136
- JP-A- 2009 125 276
- JP-A- 2014 019 189
- JP-A- 2018 020 619
- US-A- 5 884 008
- US-A1- 2008 149 300
- US-A1- 2019 054 863

## Description

### TECHNICAL FIELD

The present disclosure relates to a vehicle system comprising a control unit, a vehicle compartment holding device for holding a removable accessory, and at least one vehicle compartment feature. The disclosure further relates to a computer-implemented method for simplifying use of a removable accessory.

The vehicle system and method according to the disclosure can be arranged in a conventional vehicles configured to be steered by a user, as well as self-driving vehicles.

Moreover, even if the vehicle system according to the disclosure will be described primarily in relation to a car, the vehicle system is not restricted to this particular vehicle, but may as well be installed in another type of vehicle, such as a truck, a bus, a rail vehicle, a flying vehicle, a marine vessel, or the like.

### BACKGROUND

Vehicle systems including a removable accessory are known in the prior art. For example, document US5884008A shows a portable hair dryer for use in a vehicle, which portable hair dryer has a handle switch responsive to pivoting and vehicle battery voltage indicator. Document US 2019/054863 A1 discloses a system according to the preamble of claim 1 and a method according to the preamble of claim 8.

However, there is a demand for providing simplified use of said removable accessory for a user located in the vehicle, for example during vehicle stillstand and/or vehicle travel.

### SUMMARY

An object of the present disclosure is to provide a vehicle system comprising a control unit, a vehicle compartment holding device for holding a removable accessory, and at least one vehicle compartment feature that provides simplified use of said removable accessory for a user located in the vehicle. This object is achieved by the features of the independent claims 1 and 8.

In this way, the user may enjoy and benefit from automatic change of setting of the at least one vehicle compartment feature as soon as the user initiates use of the removable accessory. Thereby, the user does not need to also manually control the setting of the at least one vehicle compartment feature, which manual control may require good knowledge of the vehicle control interface and vehicle features, and additionally be inconvenient.

Further advantages are achieved by implementing one or several of the features of the dependent claims.

In some example embodiments, the vehicle system further comprises a removable accessory in form of a removable container including at least one vanity item, or in form of a removable vanity item. On other words, when a user desires to carry out some cosmetic, beauty or hair self-care, the user may simply remove the removable accessory from the holding device and gain access to a vanity item, and due to automatic change of setting of the vanity mirror function, the cosmetic, beauty or hair self-care is simplified.

In some example embodiments, the vanity item is a make-up item, a make-up remover item, a hair dryer, a shaving item, a hair styling tool, a nail polish item or nail polish remover.

In some example embodiments, the holding device is an openable and closeable storage compartment or an openable and closeable clamping device. Thereby, undesired displacement of the removable accessory, for example during driving, may be prevented. Moreover, the holding signal may relatively simply be arranged to indicate whether the holding device is in a first or second position, namely by monitoring whether the openable and closeable storage compartment or the openable and closeable clamping device is in a closed state or opened state.

The disclosure also relates to a vehicle comprising a system as described above.

In some example embodiments, the step of changing the setting to the at least one vehicle compartment feature in response to a change in the holding signal involves moving a vanity mirror or electronic display that may be set in a selfie mode from a storage position to a display position, and wherein the vehicle comprises a recess in the roof for receiving the vanity mirror or electronic display when being positioned in the storage position. In other words, when the user removes the removable accessory from the holding device, the vanity mirror or electronic display that may carry out a mirror functionality, automatically moves from the storage position in a recess in the roof to a display position in front of the user for simplifying cosmetic, beauty or hair self-care.

In some example embodiments, the vehicle comprises a plurality of seats for vehicle passengers, and the control unit is configured to determining a seating location of a user removing a removable accessory from the holding device, and based on the determined seating location, changing the setting of the vehicle compartment feature. Thereby, the vehicle system may adapt the change of setting of the vehicle compartment feature specifically to the seat of the relevant user.

In other words, in a vehicle having at least a first seat and a second seat, each being associated with an individual holding device adapted for holding an individual removable accessory, a removal of the removable accessory from the holding device associated with the first seat will then result in a change of setting of the vehicle compartment feature specifically directed towards a user seated in the first seat, while only little or substantially no change of setting of the vehicle compartment feature will occur for the user seated in the second seat. For example, if the vehicle compartment feature is vanity mirror function, such as for example motion of a first vanity mirror from a storage position to a display position, the user seated in the first seat will be provided with a vanity mirror function, while the user seated in the second seat will not be provided with a vanity mirror function, i.e. a second vanity mirror will remain in the storage position.

In some example embodiments, the removable compartment accessory is a removable container with at least one vanity item, or a removable vanity item.

In some example embodiments, changing the setting to at least one vehicle compartment feature involves increasing an intensity in vanity mirror light by means of the vehicle control unit when the state of the holding device goes from the first state to the second state, and decreasing the intensity in vanity mirror light by means of the vehicle control unit when the state of the holding device goes from the second state to the first state. Consequently, removal of the removable accessory from the holding device will result in increased vanity mirror light intensity, and putting back the removable accessory to the holding device will result in decreased vanity mirror light intensity.

In some example embodiments, changing the setting to at least one vehicle compartment feature involves initiating display of a vanity mirror, or initiating selfie mode of an electronic display, by means of the vehicle control unit when the state of the holding device goes from the first state to the second state, and terminating display of the vanity mirror, or terminating the selfie mode of the electronic display, by means of the vehicle control unit when the state of the holding device goes from the second state to the first state. Consequently, removal of the removable accessory from the holding device will result in provision of vanity mirror functionality, and putting back the removable accessory to the holding device will result in termination of the vanity mirror functionality.

In some example embodiments, the method further comprises further comprises steps of obtaining a vehicle operating state by means of the vehicle control unit and determining whether the current vehicle operating state is a safe state for changing the setting to the at least one vehicle compartment feature, or whether the current vehicle operating state is an unsafe state for changing the setting to the at least one vehicle compartment feature, and inhibiting any change of setting to the at least one vehicle compartment feature unless the current vehicle operating state is the safe state. Thereby, the vehicle system restrains a vehicle driver from for example cosmetic, beauty or hair self-care during driving for avoiding driver distraction from closely following the traffic situation.

In some example embodiments, the method further comprises wherein a safe state corresponds to a stationary vehicle or a vehicle operating in a self-driving mode. Further features and advantages of the invention will become apparent when studying the appended claims and the following description.

### BRIEF DESCRIPTION OF DRAWINGS

The disclosure will be described in detail in the following, with reference to the attached drawings, in which
- Fig. 1: shows schematically an interior view of a vehicle passenger compartment having an example embodiment of the vehicle system according to the disclosure,
- Fig. 2: shows schematically a further interior view of a vehicle passenger compartment having another example embodiment of the vehicle system according to the disclosure,
- Fig. 3: shows schematically still a further interior view of a vehicle passenger compartment having still another example embodiment of the vehicle system according to the disclosure,
- Fig. 4: shows schematically a side of a vehicle having an example embodiment of the vehicle system according to the disclosure,
- Fig. 5: shows schematically an example embodiment of the holding device and a removable accessory,
- Fig. 6: shows schematically a further example embodiment of the holding device and a removable accessory,
- Fig. 7: shows schematically still another example embodiment of the holding device and a removable accessory,
- Fig. 8: shows schematically an example embodiment of the holding device and a removable accessory in form of a hair dryer,
- Fig. 9a, 9b: show schematically an example embodiment of the holding device in form a storage compartment in a closed and opened state, respectively,
- Fig. 10a,10b: show schematically an example embodiment of the vehicle compartment feature in form of a vanity mirror function, in a storage position and display position, respectively,

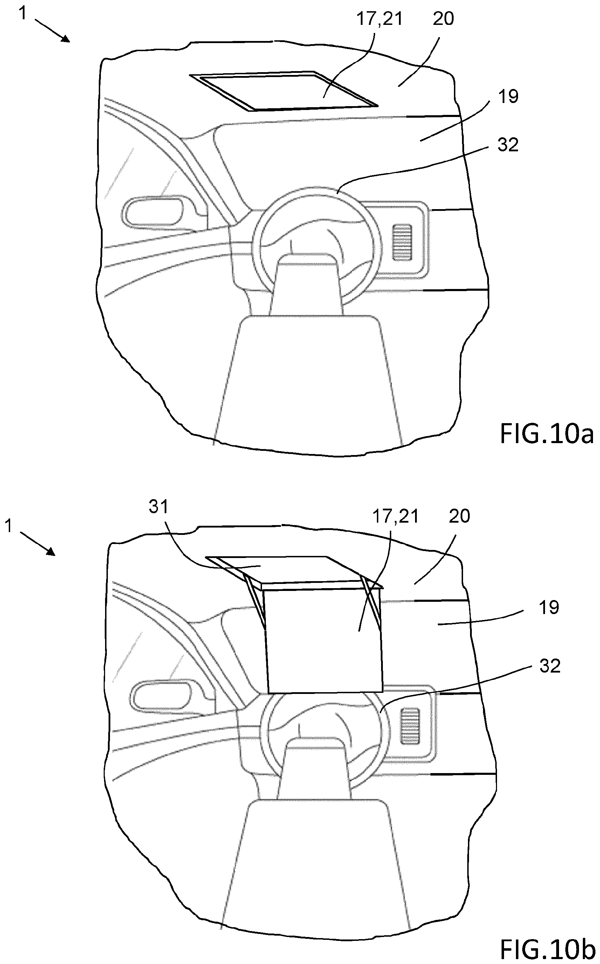

- Fig. 10a-11c: show schematically a sectional view of the vanity mirror function of figures 10a-10b in three consecutive motion states,

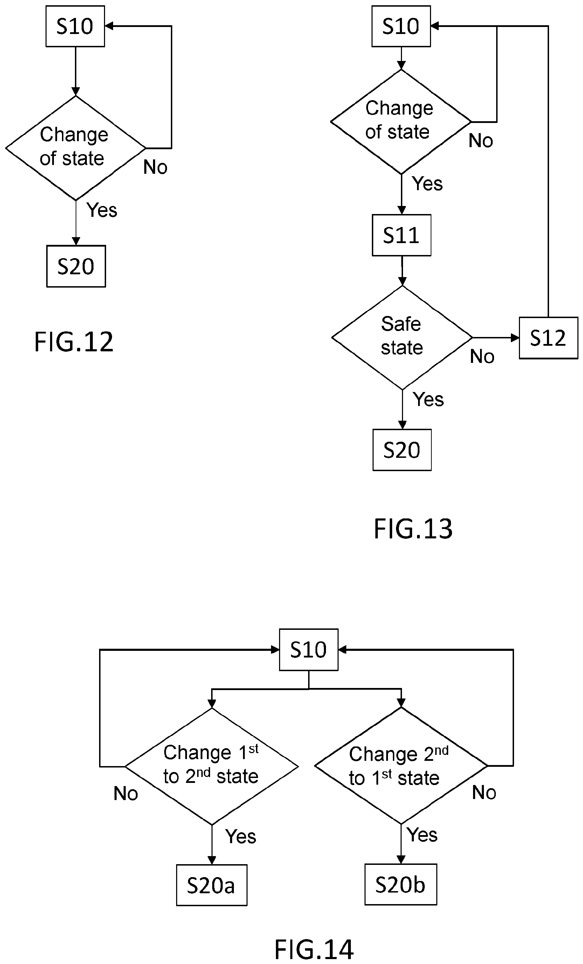

- Fig.12: shows a first example embodiment of a flow chart describing the method according to the disclosure,
- Fig.13: shows a second example embodiment of a flow chart describing the method according to the disclosure, and
- Fig.14: shows a third example embodiment of a flow chart describing the method according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

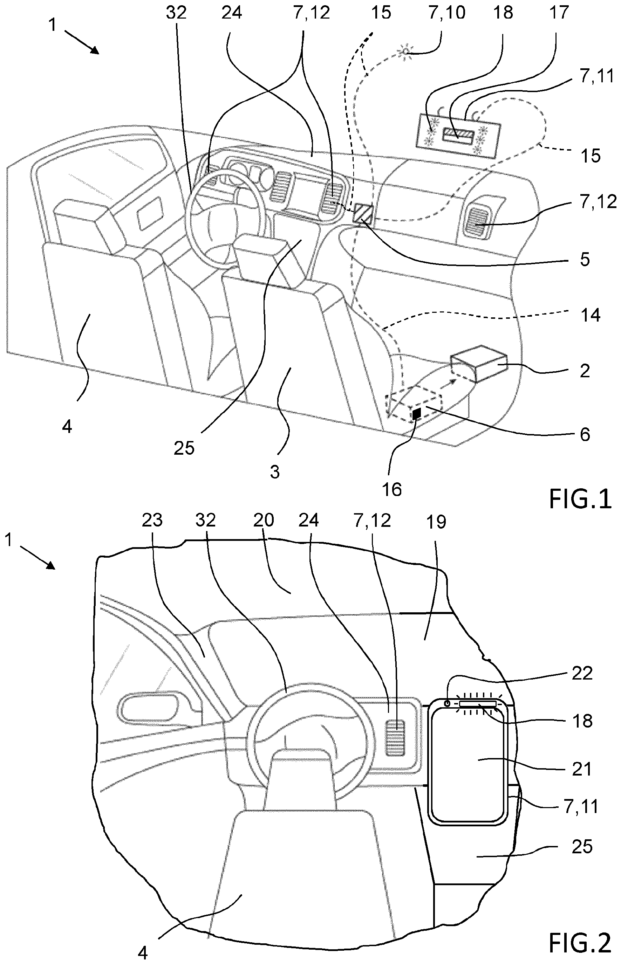

Figure 1 schematically shows an interior of a passenger compartment of the vehicle, including a driver seat 4, a passenger seat 3, a steering wheel 32, a dashboard 24, etc. A first example embodiment of a vehicle system 1 according to the disclosure is described below with reference to figure 1.The vehicle system 1 is configured for providing simplified use of a removable accessory 2 for a user located in the vehicle. For example, the user may be seated in the passenger seat 3 side by side with the driver seat 4. Alternatively, the user may be seated in the driver seat 4, or in any of the rear seats, or any other seat of the vehicle.

The vehicle system 1 comprises a control unit 5, a vehicle compartment holding device 6 for holding the removable accessory 2, and at least a vanity mirror function. The control unit 5 is configured to receive a holding signal 14 from the holding device 6, the holding signal 14 indicating if the holding device 6 is holding the removable accessory 2 or not. The control unit 5 is further configured to send a control signal 15 for changing a setting to the vanity mirror function in response to a change in the holding signal 14.

In other words, some kind of sensor or detector device 16 associated with the holding device 6 generates a holding signal 14 that enables the control unit 5 to determine whether the holding device 6 is holding the removable accessory 2, or whether the holding device 6 is not holding the removable accessory 2.

For example, the sensor or detector device 16 associated with the holding device 6 may be a proximity sensor, which for example rely on electromagnetic fields, light and/or sound for determining range to an object, thereby signaling the presence of a removable accessory in the holding device 6, or not. For example, the proximity sensor may be an ultrasonic sensor. According to still a further example, the removable accessory 2 may include a radio frequency (RF and RFID) tag and a transceiver arrangement at the holding device 6 may be configured for signaling the presence of a removable accessory in the holding device 6, or not.

Alternatively, the sensor or detector device 16 may be a contact sensor, such as a mechanical contact switch, or light barrier sensor, configured for being sensitive to the presence of the removable accessory 2 in the holding device 6.

Still more alternatively, the sensor or detector device 16 may be a vision sensor, such as a camera, wherein the sensor or detector device, or the control unit 5, or a cloud based processing unit, may be used for executing image recognition software configured determining the presence of the removable accessory 2 in the holding device 6.

The control unit 5 may be configured to monitor the holding signal 14, and to send a control signal 15 to the at least one vehicle compartment feature 7 for changing a setting thereof, in response to a change in the holding signal 14, in particular in response to detection of removal of the removable accessory 2 from the holding device 6.

The holding signal and/or control signal 15 may be transmitted via an electrically conductive wire or via wire-less technology.

In the example embodiment of figure 1, three different types of vehicle compartment features 7 are illustrated being controlled by the control unit 5, namely compartment light 10, vanity mirror function 11, and compartment climate system 12. However, the vehicle system according to the invention is implemented such that the control unit controls only the vanity mirror function. Hence, the control unit 5 is configured to send a control signal 15 to the vanity mirror function 11 only, for changing a setting thereof, in response to a change in the holding signal 14.

The term compartment light 10 means the lighting arrangement for lighting up the interior of the passenger compartment. The compartment light 10 may thus for example corresponds to one, two or more interior lights or light assemblies arranged for illuminating the interior of the compartment. The one or more lights or light assemblies may be point lights, i.e. forming a substantially rounded or rectangular light source, or elongated lights, i.e. strip like light sources. The compartment light 10 serve to illuminate the passenger compartment for enhancing a user's or passenger's interior compartment visibility. In particular, the compartment light 10 may be arranged to relatively strongly illuminate the user or passenger when seated in a vehicle seat 3, 4. The compartment light 10 does not mean light dedicated primarily for illuminating the interior of a small storage compartment, such as a glove-compartment or the like.

A change of setting of the compartment light 10, that does not correspond to the invention, may thus involve a change in terms of illumination strength of the compartment light 10, e.g. a change in lumen or lux. The term vanity mirror function may refer to various different aspects that influence and provide vanity mirror functionality for a use or passenger, i.e. vanity mirror provision. For example, vanity mirror function may correspond vanity mirror position in case of a moveable vanity mirror arrangement. The vanity mirror 17 may for example be movable between a storage position and a display position, wherein the vanity mirror 17 when located in the storage position is arranged to give the user or driver good driving and/or vehicle exterior visibility, and thus not to conceal or block exterior visibility.

Moreover, the vanity mirror 17 when located in the display position may be arranged to provide the user or driver with good self-visibility, in particular of the driver's or user's own face and/or hair. In other words, vanity mirror 17 may be arranged in front of the face of a driver or user when being located in the display mode.

The vanity mirror 17 may be configured to be moved, folded, pivoted or slided between the storage position and display position.

According to a further example, vanity mirror function may correspond to mirror visibility in case of a moveable mirror cover or mirror cover with adjustable transparency. The vanity mirror 17 may thus be stationary while the mirror cover position or mirror cover transparency may be adjustable for enabling a user selective access to a vanity mirror.

Figure 2 schematically shows a further example of interior of a passenger compartment of the vehicle, including a driver seat 4, a steering wheel 32, a dashboard 24, a roof, a windscreen 19, etc.

According to a further example, as schematically illustrated in figure 2, the vanity mirror function may correspond to setting a vehicle electronic display 21 that may be set in a selfie mode. Selfie mode involves for example recording moving images using a camera 22 and displaying the recorded movie in real-time on the electronic display 21. The camera 22 may for example be integrated in the same unit as the electronic display 21, as shown in figure 2. Alternatively, the camera 22 may be mounted separately from the display 21. The electronic display 21 may for example be a stationary vehicle display, such as a dashboard-mounted display. Alternatively, the electronic display may be moveable between a storage position and a display position.

With reference to figure 1 and figure 2, the vanity mirror function may, according to still a further example, correspond to vanity mirror light 18, i.e. a dedicated light source 18 configured for illuminating a user that is located in front of the vanity mirror 17 or the electronic display 21. The vanity mirror light 18 may for example be positioned adjacent the vanity mirror 17 or electronic display 21, e.g. on the same unit as the vanity mirror 17 or electronic display 21. Alternatively, the vanity mirror light 18 may be located at a suitable location in the passenger compartment, such as for example in the interior roof 20, at any of the side pillars 23, at the dashboard 24, at the vehicle center console 25, or the like.

A change of setting of the vanity mirror function may thus for example involve movement of the vanity mirror between a storage position and a display position, or a change in mirror visibility in case of a moveable mirror cover or mirror cover with adjustable transparency, or setting the vehicle electronic display in a selfie mode, or a change in vanity mirror light intensity.

The term compartment climate system 12 corresponds for example to the vehicle HVAC system, i.e. heating, ventilation and air conditioning system arranged for providing indoor and automotive ambient comfort.

A change of setting of the compartment climate system 12, that does not correspond to the invention, may thus for example involve a change in air temperature of the ventilation air entering the passenger compartment via air vents, or a change in air flow direction of the ventilation air entering the passenger compartment via air vents, or a change in air velocity (distance traveled per unit of time) or air volume flow (m³ per unit of time) of the ventilation air entering the passenger compartment via air vents.

Specifically, a change of setting of the compartment climate system 12 may for example involve temporary reducing air temperature of the ventilation air entering the passenger compartment via air vents in case the removable accessory is a hair dryer, for the purpose of proactively avoiding cabin temperature increase caused by operation of the hair dryer. Furthermore, a change of setting of the compartment climate system 12 may for example involve temporary increasing air velocity or air volume flow of the ventilation air entering the passenger compartment at an air vent that is located closest or adjacent to the seat of the user that removed the removable accessory from the holding device 6, thereby enabling improved drying of for example applied nail polish, or improved ventilation for more quickly diluting evaporated organic solvent of for example a nail polish remover.

According to a further example embodiment, the vehicle may comprise a plurality of seats 3,4 for vehicle passengers, and the control unit 5 may be configured to determining a seating location of a user removing a removable accessory 2 from the holding device 6, and based on the determined seating location, changing the setting of the vehicle compartment feature 7, i.e. changing the setting of one or more vehicle compartment features 7 associated with the seat in which the user that removed a removable accessory 2 from the holding device 6 is seated.

Consequently, with reference to figure 1, if for example a user sitting in the passenger seat 3 and removes a removable accessory from a holding device associated with the passenger seat 3, the control unit 5 may be configured to determining a seating location of a user removing a removable accessory 2 from the holding device 6, and subsequently, based on the determined seating location, changing the setting of the vehicle compartment feature 7. In other words, the control unit 5 will determine that the user is seated in the passenger seat 3, and subsequently changing the setting of the vehicle compartment feature 7 associated with the seat of the user, i.e. the passenger seat 3. The vanity mirror function associated with the passenger seat 3 is triggered, in response to removal of the removable accessory from the holding device of the passenger seat 3.

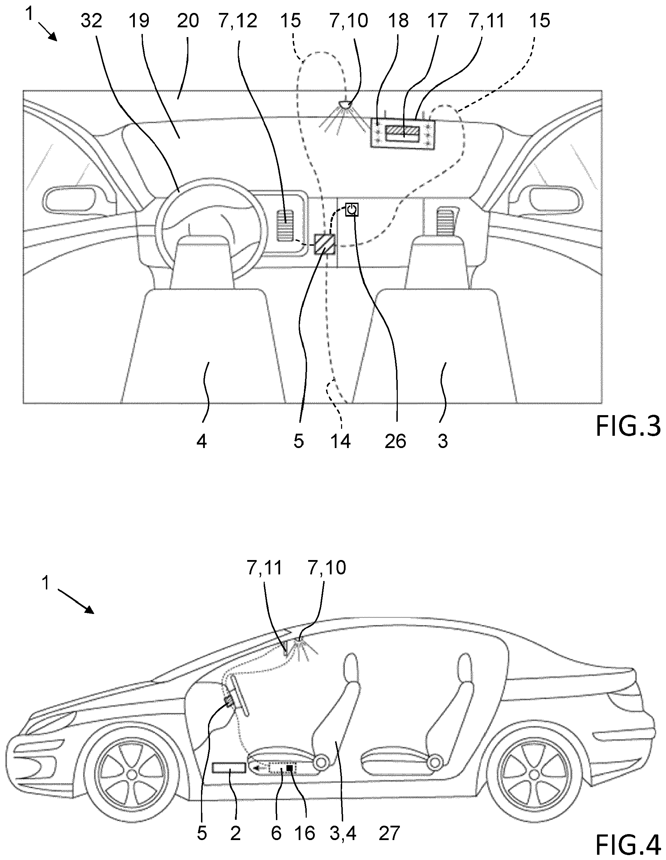

Figure 3 and figure 4 each show similar example embodiments of the vehicle system according to the disclosure, but with small variations and in different views.

According to the invention, the vanity mirror function 11 is illustrated as a moveable vanity mirror 17 having integrated vanity mirror light 18 and being foldably mounted in the interior roof 20 of the vehicle.

The vehicle system shown in figure 3 further includes a user input control device 26 that is configured for enabling a user to manually, or by voice-control, change the setting of the vehicle compartment feature 7. Consequently, the control unit 5 may receive a user input signal from the user input control device 26 indicating that the user wishes a change in setting of the at least one vehicle compartment feature 7. In other words, if for example the vehicle compartment feature 7 is a vanity mirror 17, the vanity mirror 17 may be folded down to a display position, or up to a storage position, if the user actuates the user input control device 26.

In figure 4, the vehicle compartment features 7 are provided in form of a compartment light 10 that is illustrated as light source mounted in the interior roof 20 of the vehicle, and in form of a vanity mirror function 11 that is illustrated as a moveable vanity mirror 17 that is foldably mounted in the interior roof 20 of the vehicle. The holding device 6 is illustrated as being integrated in a vehicle seat 3, 4, or being positioned under the seat 3,4, and a sensor or detector device 16 associated with the holding device 6 is provided for generating a holding signal 14 that enables the control unit 5 to determine whether the holding device 6 is holding the removable accessory 2, or whether the holding device 6 is not holding the removable accessory 2.

Figure 4 schematically illustrates a situation where the removable accessory 2 just has been removed from the holding device 6, and wherein the control unit 5 has controlled a vanity mirror 17 to fold down from a storage position to the display position, and activation of a compartment light 10.

Figure 1 and figure 4 have illustrated the holding device 6 integrated in a vehicle seat 3, 4, or being positioned under the seat 3,4. However, one or more holding device may be located at various locations within the vehicle for providing good access thereto for one or more users, independent of the user's seat of the vehicle.

In other words, one or more holding devices 6 may be provided adjacent the rear seats of the vehicle for enabling a user sitting in the rear sear access easy to the removable accessory, and automatic provision of vanity mirror function. In some example embodiments, the holding device may be arranged at a seat of the vehicle, or at an entrance door of the vehicle, or at a passenger leg space of the vehicle, or at a vehicle center console, or at a vehicle dashboard.

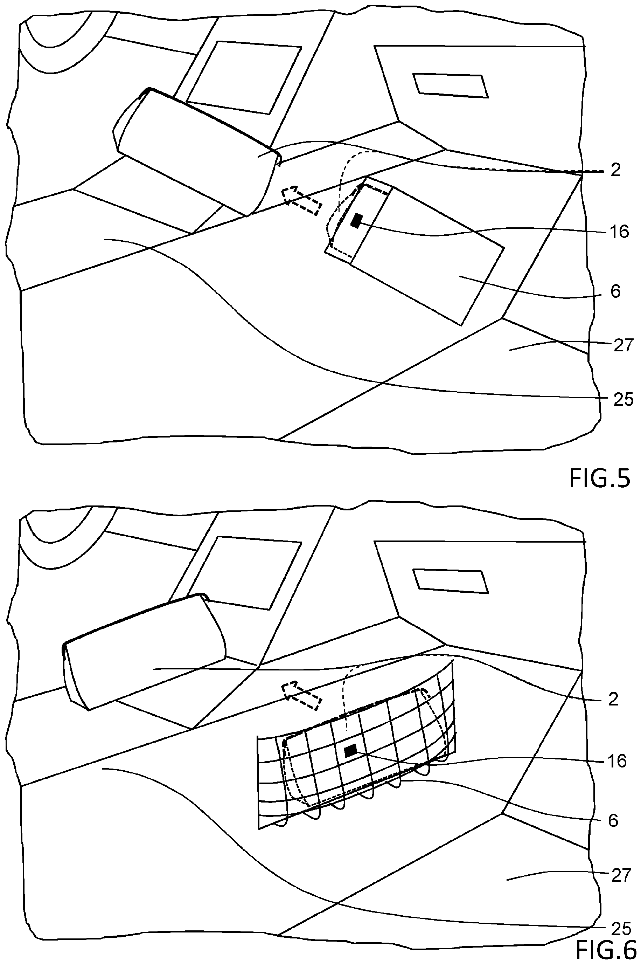

As an example, figure 5 shows the passenger leg space 27 of the vehicle and a holding device 6 fastened to a side surface of the vehicle center console 25. Moreover, the holding device 6 may comprise a non-closable container having a top opening for enabling easy removal and/or insertion of the removable accessory 2 from/into the holding device 6. A sensor or detector device 16 associated with the holding device 6 is provided for generating a holding signal 14 that enables the control unit 5 to determine whether the holding device 6 is holding the removable accessory 2, or whether the holding device 6 is not holding the removable accessory 2.

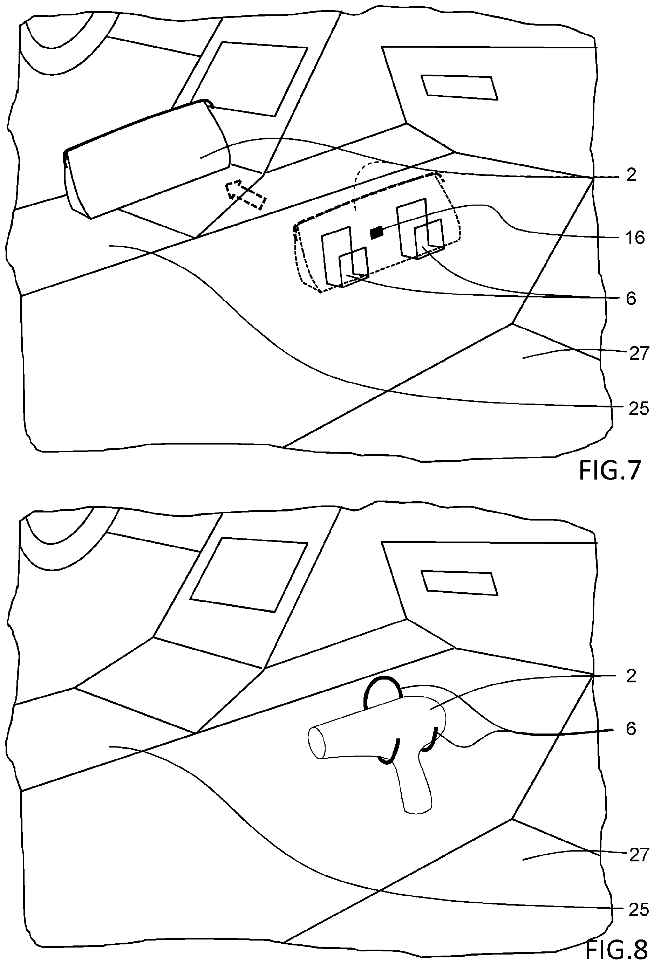

Figure 7 shows schematically still a further example embodiment of the vehicle system, wherein the holding device 6 is fastened to a side surface of the vehicle center console 25 associated with the passenger leg space 27. The holding device 6 comprises two hook-shaped members that jointly are arranged to form a support surface suitable for holding the removable accessory 2, wherein the removable accessory 2 may be simple inserted or removed from holding device. A sensor or detector device 16 associated with the holding device 6 is provided for generating a holding signal 14 that enables the control unit 5 to determine whether the holding device 6 is holding the removable accessory 2, or whether the holding device 6 is not holding the removable accessory 2.

The removable accessory 2 may for example be a removable container including at least one vanity item. The container may be an openable and closable hard shell box, a soft shell bag, or the like. The vanity item stored within the container may for example be a make-up item, a make-up remover item, a hair dryer, a shaving item, a hair styling tool, a nail polish item or nail polish remover.

Alternatively, the removable accessory 2 may be a removable vanity item itself. An example embodiment of such a scenario is illustrated in figure 8, wherein the holding device 6 is fastened to a side surface of the vehicle center console 25 associated with the passenger leg space 27, and wherein the holding device 6 comprises a hook-shaped member that is arranged to hold a removable accessory 2 in form of a hair dryer. The hair dryer may be simple inserted or removed from holding device 6, and a sensor or detector device 16 associated with the holding device 6 is provided for generating a holding signal 14 that enables the control unit 5 to determine whether the holding device 6 is holding the removable accessory 2, or whether the holding device 6 is not holding the removable accessory 2.

In the example embodiments of figure 1 and 4-8, the holding signal 14 is configured to indicate if the holding device 6 is holding the removable accessory 2 or not. However, in certain implementations, it may be difficult to correctly and reliably determining a holding status of the holding device 6, i.e. to determine whether the removable accessory 2 is located within the holding device 6, or not. In such case, it may sometimes be possible to instead monitoring the current setting of the holding device 6, which may be set in first and a second position.

For example, the holding device 6 may be an openable and closeable storage compartment, such as an openable and closeable glove-box, an openable and closeable dashboard storage compartment, or an openable and closeable storage drawer under the seat. Furthermore, the first position may correspond to a closed state of such storage compartment, and the second position may correspond to an open state, or at least a non-closed state, of said storage compartment. Alternatively, the holding device 6 may be an openable and closeable clamping or gripping device that may be arranged to be opened for enabling removal of the removable accessory 2 from the holding device 6, and closed for enabling clamping or securement of the removable accessory 2 to the holding device 6. Furthermore, the first position may then correspond to a closed state of the holding device 6, and the second position may correspond to an open state, or at least a non-closed state, of the holding device 6. The clamping or gripping device may for example be switched from an open to a closed state by a manual actuation of a locking mechanism, such as a locking lever.

When monitoring the current setting of a holding device 6 that may be set in first and a second position, the control unit 5 may be configured to receive a holding signal 14 from the holding device 6, wherein the holding signal indicates if the holding device is in a first or second position. The control unit 5 is then configured to send a control signal 15 for changing a setting to the vanity mirror function 11.

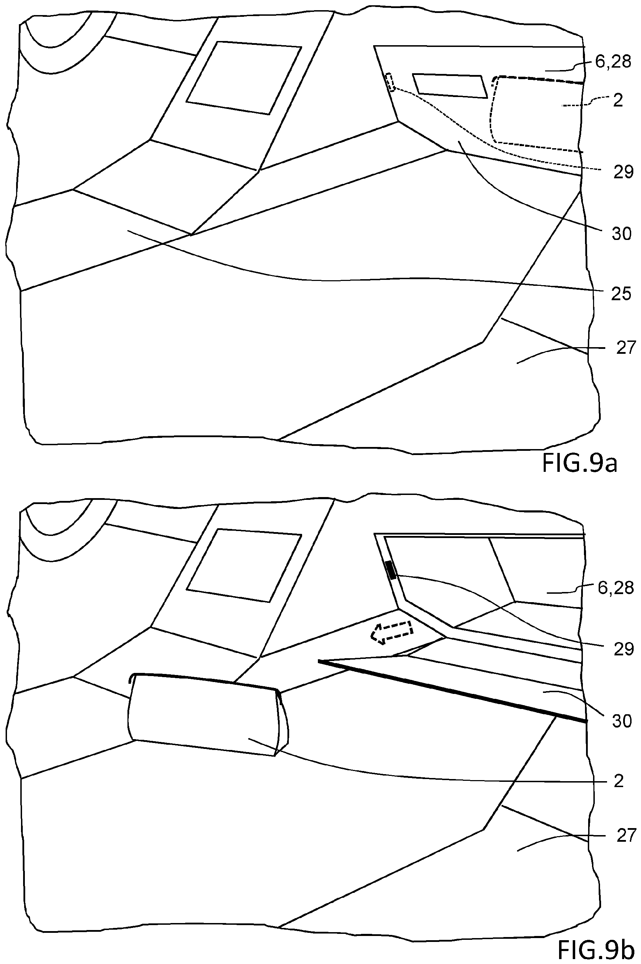

Such a scenario is schematically illustrated in figures 9a and 9b, which shows a holding device in form of a glove-box 28 having an openable and closable lid 30. Figure 9a shows the holding device 6, e.g. the glove-box 28, in a first position corresponding to the closed state of the lid 30, and with the removable accessory 2, such as a vanity bag, being stored within the glove-box 28. Figure 9b shows the glove-box 28 in the second position corresponding to the opened state of the lid 30, and with the removable accessory 2 being removed from the glove-box 28.

Consequently, instead of monitoring and detecting the presence of the removable accessory 2 within the glove-box 28, some kind of sensor or detector device 29 associated with the holding device 6 generates a holding signal 14 that enables the control unit 5 to determine whether the holding device 6 is in the first or second position, e.g. whether the lid 30 is in an closed or opened state. In figures 9a and 9b, the sensor or detector device 29 is arranged for detecting and distinguishing between a closed and opened lid 30, and may for example be arranged to detect the lid 30 when the lid 30 is located in the closed state.

Since the relative position of the glove-box 28 and lid 30 in the closed state is generally very well-defined, the sensor or detector device 29 may be designed and located to accurately and reliably detect for example the closed state of the glove-box 28. The same applies to all types of openable and closeable storage compartments and openable and closeable clamping or gripping device.

Figures 10a and 10b show part of an example embodiment of the vehicle system including a moveable vanity mirror 17 or electronic display 21 that may be set in a selfie mode for providing the function of a vanity mirror, similar to the example embodiments of figure 1, 3 and 4, which also show a moveable vanity mirror 17 arranged in the interior roof 20 of the vehicle. In the example embodiment of figures 10a-10b, the moveable vanity mirror 17 or electronic display 21 is arranged in the interior roof 20 in front of the driver, such that the moveable vanity mirror 17 or electronic display 21 may be moved between a storage position, as shown in figure 10a, and a display position, as shown in figure 10b.

The size and position of the moveable vanity mirror 17 or electronic display 21 in the display position may conceal and block the driver's view of the road ahead.

Therefore, the control unit 5 may be configured for obtaining a vehicle operating state and determining whether the current vehicle operating state is a safe state for moving the vanity mirror 17 or electronic display 21 from the storage position to the display position, and inhibiting any such movement of the moveable vanity mirror 17 or electronic display 21 when the current vehicle operating state is not in a safe state. A safe state may for example corresponds to a stationary vehicle or a vehicle operating in a self-driving mode.

When the vehicle is in a safe state, changing the setting to the at least one vehicle compartment feature in response to a change in the holding signal may involve moving a vanity mirror 17 or electronic display 21 that may be set in a selfie mode from a storage position to a display position, and wherein the vehicle comprises a recess 31 in the vehicle interior roof 20 for receiving the vanity mirror or electronic display 21 when being positioned in the storage position.

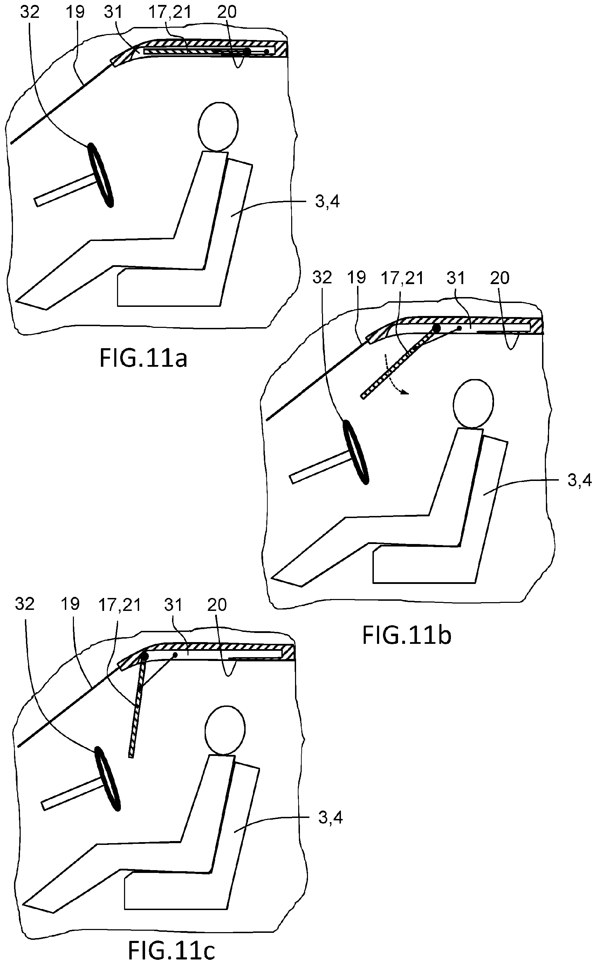

Figures 11a - 11c show a sectional side-view of the moveable vanity mirror 17 or electronic display 21 that may be set in a selfie mode described with reference to figures 10a-10b in a storage position, an intermediate position, and a display position, respectively. The motion mechanism controlling the motion of the moveable vanity mirror 17 or electronic display 21 may include an actuator, such as an electrical motor, and suitable linkage arms, guiding channels, and/or pivoting shafts, depending on the desired motion trajectory of the moveable vanity mirror 17 or electronic display 21.

Depending on size of the vanity mirror 17 or electronic display 21, other types of motion mechanisms may be used. Moreover, the vanity mirror may possibly be a flexible mirror or roll-up mirror, thereby enabling other types of motion mechanisms. A first example embodiment of a computer-implemented method for simplifying use of a removable accessory 2 in a vehicle will be described below with reference to figure 12. The method comprises a first step S10 of monitoring, by means of a vehicle control unit 5, a state of a holding device 6 for holding the removable accessory 2. A first state may correspond to when the holding device 6 is holding the removable accessory 2 and a second state may correspond to when the holding device 6 is not holding the removable accessory 2.

Alternatively, a first state may correspond to when the holding device is in a first position and a second state may correspond to when the holding device is in a second position

The method further comprises a second step S20 of changing, when the state changes, a setting to the vanity mirror function 11.

As described with reference to figure 13, the method may optionally include a first intermediate step S11 of obtaining information about the vehicle operating state by means of the vehicle control unit 5 and determining whether the current vehicle operating state is a safe state for changing the setting to the vanity mirror function 11, or whether the current vehicle operating state is an unsafe state for changing the setting to the vanity mirror function 11. The method may then include a subsequent intermediate step S12 of inhibiting any change of setting to the vanity mirror function 11 unless the current vehicle operating state is the safe state.

The safe state may for example correspond to a stationary vehicle or a vehicle operating in a self-driving mode. Furthermore, detection and checking of safe state is primarily or only relevant when the vehicle driver removes the removable accessory from a holding device associated with the driver seat, because only the vehicle driver may need restrainment from distractive activity while driving.

Some example operation scenarios of the vehicle system will be described below with reference to figure 14, which shows the method described with reference to figure 12, but with more details relating to the type of change of state and the result.

The method may comprise a second step S20a of increasing an intensity in vanity mirror light 18 by means of the vehicle control unit 5 when the state of the holding device 6 goes from the first state to the second state, and a third step S20b of decreasing the intensity in vanity mirror light 18 by means of the vehicle control unit 5 when the state of the holding device 6 goes from the second state to the first state.

According to yet a further alternative embodiment, that may be combined with the method described above, the method may comprise a second step S20a of initiating display of a vanity mirror 17, or initiating selfie mode of an electronic display 21, by means of the vehicle control unit 5 when the state of the holding device 6 goes from the first state to the second state, and a third step S20b of terminating display of the vanity mirror 17, or terminating the selfie mode of the electronic display 21, by means of the vehicle control unit 5 when the state of the holding device 6 goes from the second state to the first state.

The present disclosure has been presented above with reference to specific embodiments. However, other embodiments than the above described are possible and within the scope of the disclosure. For example, the vehicle system and associated method may be implemented in self-driving vehicles lacking a steering wheel. Different method steps than those described above, performing the method by hardware or software, may be provided within the scope of the disclosure. For example, the method described with reference to figure 14 may of course be altered to include also the first and second intermediate steps S11,S12 described with reference to figure 13.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Reference signs mentioned in the claims should not be seen as limiting the extent of the matter protected by the claims, and their sole function is to make claims easier to understand.

## Claims

1. A vehicle system comprising a control unit (5), a vehicle compartment holding device (6) for holding a removable accessory (2), and at least one vehicle compartment feature (7), wherein
the control unit (5) is configured to receive a holding signal from the holding device (6), the holding signal indicating:
- if the holding device (6) is holding the removable accessory (2) or not, or
- if the holding device (6) is in a first or second position, and
the control unit (5) is further configured to send a control signal for changing a setting to the at least one vehicle compartment feature (7) in response to a change in the holding signal, wherein the vehicle compartment feature (7) is a vanity mirror function, **characterised in that** the holding device (6) is arranged at a seat (3, 4) of the vehicle, at an entrance door of the vehicle, at a passenger leg space (27) of the vehicle, at a vehicle center console (25), or at a vehicle dashboard (24).

2. The vehicle system according to claim 1, further comprising a removable accessory (2) in form of a removable container including at least one vanity item, or in form of a removable vanity item.

3. The vehicle system according to claim 2, wherein the vanity item is a make-up item, a make-up remover item, a hair dryer, a shaving item, a hair styling tool, a nail polish item or nail polish remover.

4. The vehicle system according to any of the preceding claims, wherein the holding device (6) is an openable and closeable storage compartment or an openable and closeable clamping device.

5. A vehicle comprising a system according to any of the claims 1-4.

6. The vehicle according to claim 5, wherein changing the setting to the at least one vehicle compartment feature (7) in response to a change in the holding signal involves moving a vanity mirror (17) or electronic display (21) that may be set in a selfie mode from a storage position to a display position, and wherein the vehicle comprises a recess (31) in the roof (20) for receiving the vanity mirror (17) or electronic display (21) when being positioned in the storage position.

7. The vehicle according to any of preceding claims 5 or 6, wherein the vehicle
comprises a plurality of seats (3,4) for vehicle passengers, and wherein the control unit (5) is configured to:
determining a seating location of a user removing a removable accessory (2) from the holding device (6), and
based on the determined seating location, changing the setting of the vehicle compartment feature (7).

8. A computer-implemented method for simplifying use of a removable accessory (2) in a vehicle, the method comprising:
monitoring, by means of a vehicle control unit (5), a state of a holding device (6) for holding the removable accessory (2),
- wherein a first state corresponds to when the holding device (6) is holding the removable accessory (2) and a second state corresponds to when the holding device (6) is not holding the removable accessory (2), or
- wherein a first state corresponds to when the holding device (6) is in a first position and a second state corresponds to when the holding device (6) is in a second position, and
when the state changes, changing a setting to at least one vehicle compartment feature (7) by means of the vehicle control unit (5), wherein the at least one vehicle compartment feature (7) is vanity mirror function,
**characterised in that**
the holding device (6) is arranged at a seat (3, 4) of the vehicle, at an entrance door of the vehicle, at a passenger leg space (27) of the vehicle, at a vehicle center console (25), or at a vehicle dashboard (24).

9. The method according to claim 8, wherein the removable accessory (2) is a removable container with at least one vanity item, or a removable vanity item.

10. The method according to any of the claims 8-9, wherein changing the setting to at least one vehicle compartment feature (7) involves:
increasing an intensity in vanity mirror light (18) by means of the vehicle control unit (5) when the state of the holding device (6) goes from the first state to the second state, and
decreasing the intensity in vanity mirror light (18) by means of the vehicle control unit (5) when the state of the holding device (6) goes from the second state to the first state.

11. The method according to any of the claims 8 - 10, wherein changing the setting to at least one vehicle compartment feature (7) involves:
initiating display of a vanity mirror (17), or initiating selfie mode of an electronic display (21), by means of the vehicle control unit (5) when the state of the holding device (6) goes from the first state to the second state, and
terminating display of the vanity mirror (17), or terminating the selfie mode of the electronic display (21), by means of the vehicle control unit (5) when the state of the holding device (6) goes from the second state to the first state.

12. The method according to any of the claims 8 - 11, further comprising:
obtaining a vehicle operating state by means of the vehicle control unit (5) and determining whether the current vehicle operating state is a safe state for changing the setting to the at least one vehicle compartment feature (7), or whether the current vehicle operating state is an unsafe state for changing the setting to the at least one vehicle compartment feature (7), and
inhibiting any change of setting to the at least one vehicle compartment feature (7) unless the current vehicle operating state is the safe state.

13. The method according to claim 12, wherein a safe state corresponds to a stationary vehicle or a vehicle operating in a self-driving mode.

## Patentansprüche

1. Fahrzeugsystem umfassend eine Steuereinheit (5), eine Fahrzeuginnenraumhaltevorrichtung (6) zum Halten eines entfernbaren Zubehörteils (2) und mindestens ein Fahrzeuginnenraummerkmal (7), wobei die Steuereinheit (5) dafür ausgelegt ist, ein Haltesignal von der Haltevorrichtung (6) zu empfangen, indem das Haltesignal Folgendes anzeigt:
- ob die Haltevorrichtung (6) das entfernbare Zubehörteil (2) hält oder nicht, oder
- ob die Haltevorrichtung (6) in einer ersten oder zweiten Position ist, und
die Steuereinheit (5) weiter dafür ausgelegt ist, ein Steuersignal zum Ändern einer Einstellung auf das mindestens eine Fahrzeuginnenraummerkmal (7) als Reaktion auf eine Änderung im Haltesignal zu übertragen, wobei das Fahrzeuginnenraummerkmal (7) eine Kosmetikspiegelfunktion ist, **dadurch gekennzeichnet, dass** die Haltevorrichtung (6) an einem Sitz (3, 4) des Fahrzeugs, an einer Eingangstür des Fahrzeugs, an einem Mitfahrerbeinplatz (27) des Fahrzeugs, an einer Fahrzeugmittelkonsole (25) oder an einem Fahrzeugarmaturenbrett (24) angeordnet ist.

2. Fahrzeugsystem nach Anspruch 1, weiter umfassend ein entfernbares Zubehörteil (2) in Form eines entfernbaren Behälters enthaltend mindestens ein Kosmetikelement oder in Form eines entfernbaren Kosmetikelements.

3. Fahrzeugsystem nach Anspruch 2, wobei das Kosmetikelement ein Make-Up-Element, ein Make-Up-Entfernungselement, ein Föhn, ein Rasierelement, ein Haarstyling-Gerät, ein Nagellackelement oder ein Nagellackentferner ist.

4. Fahrzeugsystem nach einem der vorgehenden Ansprüche, wobei die Haltevorrichtung (6) ein öffenbares und schließbares Lagerungsfach oder eine öffenbare und schließbare Klemmvorrichtung ist.

5. Fahrzeug umfassend ein System nach einem der Ansprüche 1-4.

6. Fahrzeug nach Anspruch 5, wobei die Änderung der Einstellung auf das mindestens eine Fahrzeuginnenraummerkmal (7) als Reaktion auf eine Änderung im Haltesignal ein Bewegen eines Kosmetikspiegels (17) oder einer elektronischen Anzeige (21) beinhaltet, der bzw. die in einem Selfiemodus von einer Lagerungsposition zu einer Anzeigeposition eingestellt werden kann, und wobei das Fahrzeug eine Ausnehmung (31) im Dach (20) aufweist zum Aufnehmen des Kosmetikspiegels (17) oder der elektronischen Anzeige (21), wenn er bzw. sie in der Lagerungsposition positioniert wird.

7. Fahrzeug nach einem der vorgehenden Ansprüche 5 oder 6, wobei das Fahrzeug eine Mehrheit von Sitzen (3,4) für Fahrzeugmitfahrer umfasst, und wobei die Steuereinheit (5) dafür ausgelegt ist:
Ermitteln einer Sitzlage eines Benutzers, der ein entfernbares Zubehörteil (2) von der Haltevorrichtung (6) entfernt, und
basierend auf der ermittelten Sitzlage, Ändern der Einstellung des Fahrzeuginnenraummerkmals (7).

8. Computerimplementiertes Verfahren zum Vereinfachen der Anwendung eines entfernbaren Zubehörteils (2) in einem Fahrzeug, welches Verfahren Folgendes umfasst:
Überwachen, mittels einer Fahrzeugsteuereinheit (5), einer Stellung einer Haltevorrichtung (6) zum Halten des entfernbaren Zubehörteils (2),
- wobei eine erste Stellung entspricht, wenn die Haltevorrichtung (6) das entfernbare Zubehörteil (2) hält, und eine zweite Stellung entspricht, wenn die Haltevorrichtung (6) das entfernbare Zubehörteil (2) nicht hält, oder
- wobei eine erste Stellung entspricht, wenn die Haltevorrichtung (6) in einer ersten Position ist, und eine zweite Stellung entspricht, wenn die Haltevorrichtung (6) in einer zweiten Position ist, und
wenn die Stellung verändert wird, Ändern einer Einstellung auf mindestens ein Fahrzeuginnenraummerkmal (7) mittels der Fahrzeugsteuereinheit (5), wobei das mindestens eine Fahrzeuginnenraummerkmal (7) eine Kosmetikspiegelfunktion ist, **dadurch gekennzeichnet, dass** die Haltevorrichtung (6) an einem Sitz (3, 4) des Fahrzeugs, an einer Eingangstür des Fahrzeugs, an einem Mitfahrerbeinplatz (27) des Fahrzeugs, an einer Fahrzeugmittelkonsole (25) oder an einem Fahrzeugarmaturenbrett (24) angeordnet ist.

9. Verfahren nach Anspruch 8, wobei das entfernbare Zubehörteil (2) ein entfernbarer Behälter ist mit mindestens einem Kosmetikelement oder ein entfernbares Kosmetikelement ist.

10. Verfahren nach einem der Ansprüche 8 - 9, wobei das Ändern der Einstellung auf mindestens ein Fahrzeuginnenraummerkmal (7) Folgendes beinhaltet:
Erhöhen einer Intensität des Kosmetikspiegellichts (18) mittels der Fahrzeugsteuereinheit (5), wenn die Stellung der Haltevorrichtung (6) von der ersten Stellung zur zweiten Stellung wechselt, und
Verringern der Intensität des Kosmetikspiegellichts (18) mittels der Fahrzeugsteuereinheit (5), wenn die Stellung der Haltevorrichtung (6) von der zweiten Stellung zur ersten Stellung wechselt.

11. Verfahren nach einem der Ansprüche 8 - 10, wobei das Ändern der Einstellung auf mindestens ein Fahrzeuginnenraummerkmal (7) Folgendes beinhaltet:
Einleiten einer Anzeige eines Kosmetikspiegels (17) oder Einleiten eines Selfiemodus einer elektronischen Anzeige (21) mittels der Fahrzeugsteuereinheit (5), wenn die Stellung der Haltevorrichtung (6) von der ersten Stellung zur zweiten Stellung wechselt, und
Beenden einer Anzeige des Kosmetikspiegels (17) oder Beenden eines Selfiemodus der elektronischen Anzeige (21) mittels der Fahrzeugsteuereinheit (5), wenn die Stellung der Haltevorrichtung (6) von der zweiten Stellung zur ersten Stellung wechselt.

12. Verfahren nach einem der Ansprüche 8 - 11, ferner umfassend:
Erhalten eines Fahrzeugbetriebszustands mittels der Fahrzeugsteuereinheit (5) und Ermitteln, ob der aktuelle Fahrzeugbetriebszustand ein sicherer Zustand ist zum Ändern der Einstellung auf das mindestens eine Fahrzeuginnenraummerkmal (7), oder ob der aktuelle Fahrzeugbetriebszustand ein unsicherer Zustand ist zum Ändern der Einstellung auf das mindestens eine Fahrzeuginnenraummerkmal (7), und
Sperren irgendeiner Änderung der Einstellung auf das mindestens eine Fahrzeuginnenraummerkmal (7) es sei denn der aktuelle Fahrzeugbetriebszustand der sichere Zustand ist.

13. Verfahren nach Anspruch 12, wobei ein sicherer Zustand entspricht einem ortsfesten Fahrzeug oder einem Fahrzeug, das in einem Selbstantriebsmodus in Betrieb ist.

## Revendications

1. Système de véhicule comprenant une unité de commande (5), un dispositif de maintien de compartiment de véhicule (6) pour maintenir un accessoire amovible (2) et au moins un élément de compartiment de véhicule (7), dans lequel
l'unité de commande (5) est configurée pour recevoir un signal de maintien provenant du dispositif de maintien (6), le signal de maintien indiquant :
- si le dispositif de maintien (6) maintient l'accessoire amovible (2) ou non, ou
- si le dispositif de maintien (6) est dans une première ou deuxième position, et
l'unité de commande (5) est en outre configurée pour envoyer un signal de commande pour modifier un réglage de l'au moins un élément de compartiment de véhicule (7) en réponse à une modification du signal de maintien, l'élément de compartiment de véhicule (7) étant une fonction de miroir de courtoisie, **caractérisé en ce que** le dispositif de maintien (6) est disposé au niveau d'un siège (3, 4) du véhicule, au niveau d'une porte d'entrée du véhicule, au niveau d'un espace pour les jambes des passagers (27) du véhicule, au niveau d'une console centrale de véhicule (25), ou au niveau d'un tableau de bord de véhicule (24).

2. Système de véhicule selon la revendication 1, comprenant en outre un accessoire amovible (2) dans la forme d'un conteneur amovible comprenant au moins un article de courtoisie, ou dans la forme d'un article de courtoisie amovible.

3. Système de véhicule selon la revendication 2, dans lequel l'article de courtoisie est un article de maquillage, un article de démaquillage, un sèche-cheveux, un article de rasage, un outil de coiffure, un article de vernis à ongles ou un dissolvant de vernis à ongles.

4. Système de véhicule selon l'une quelconque des revendications précédentes, dans lequel le dispositif de maintien (6) est un compartiment de rangement ouvrable et fermable ou un dispositif de serrage ouvrable et fermable.

5. Véhicule comprenant un système selon l'une quelconque des revendications 1 à 4.

6. Véhicule selon la revendication 5, dans lequel la modification du réglage de l'au moins un élément de compartiment de véhicule (7) en réponse à une modification du signal de maintien implique le déplacement d'un miroir de courtoisie (17) ou d'un affichage électronique (21) pouvant être réglé dans un mode d'egoportrait à partir d'une position de rangement vers une position d'affichage, et dans lequel le véhicule comprend un évidement (31) dans le toit (20) pour recevoir le miroir de courtoisie (17) ou l'affichage électronique (21) lorsqu'ils sont positionnés dans la position de rangement.

7. Véhicule selon l'une quelconque des revendications précédentes 5 ou 6, dans lequel le véhicule comprend une pluralité de sièges (3, 4) pour les passagers du véhicule, et dans lequel l'unité de commande (5) est configurée pour déterminer un emplacement d'assise d'un utilisateur retirant un accessoire amovible (2) depuis le dispositif de maintien (6), et
sur la base de l'emplacement d'assise déterminé, modifier le réglage de l'élément de compartiment de véhicule (7).

8. Procédé mis en oeuvre par ordinateur pour simplifier l'utilisation d'un accessoire amovible (2) dans un véhicule, le procédé comprenant :
la surveillance, au moyen d'une unité de commande de véhicule (5), d'un état d'un dispositif de maintien (6) pour maintenir l'accessoire amovible (2),
- dans lequel un premier état correspond au moment où le dispositif de maintien (6) tient l'accessoire amovible (2), et un deuxième état correspond au moment où le dispositif de maintien (6) ne tient pas l'accessoire amovible (2), ou
- dans lequel un premier état correspond au moment où le dispositif de maintien (6) est dans une première position, et un deuxième état correspond au moment où le dispositif de maintien (6) est dans une deuxième position, et
lorsque l'état change, la modification d'un réglage d'au moins un élément de compartiment de véhicule (7) au moyen de l'unité de commande de véhicule (5), l'au moins un élément de compartiment de véhicule (7) étant une fonction de miroir de courtoisie, **caractérisé en ce que** le dispositif de maintien (6) est disposé au niveau d'un siège (3, 4) du véhicule, au niveau d'une porte d'entrée du véhicule, au niveau d'un espace pour les jambes des passagers (27) du véhicule, au niveau d'une console centrale de véhicule (25), ou au niveau d'un tableau de bord de véhicule (24).

9. Procédé selon la revendication 8, dans lequel l'accessoire amovible (2) est un conteneur amovible comprenant au moins un article de courtoisie, ou un article de courtoisie amovible.

10. Procédé selon l'une quelconque des revendications 8 à 9, dans lequel la modification du réglage de l'au moins un élément de compartiment de véhicule (7) comprend les étapes consistant à :
augmenter une intensité de l'éclairage du miroir de courtoisie (18) au moyen de l'unité de commande de véhicule (5) lorsque l'état du dispositif de maintien (6) passe du premier état au deuxième état, et
diminuer l'intensité de l'éclairage du miroir de courtoisie (18) au moyen de l'unité de commande du véhicule (5) lorsque l'état du dispositif de maintien (6) passe du deuxième état au premier état.

11. Procédé selon l'une quelconque des revendications 8 à 10, dans lequel la modification du réglage de l'au moins un élément de compartiment de véhicule (7) comprend les étapes consistant à :
lancer l'affichage d'un miroir de courtoisie (17), ou lancer le mode d'egoportrait d'un affichage électronique (21), au moyen de l'unité de commande de véhicule (5) lorsque l'état du dispositif de maintien (6) passe du premier état au deuxième état, et
terminer l'affichage du miroir de courtoisie (17), ou terminer le mode d'egopor-trait de l'affichage électronique (21), au moyen de l'unité de commande de véhicule (5) lorsque l'état du dispositif de maintien (6) passe du deuxième état au premier état.

12. Procédé selon l'une quelconque des revendications 8 à 11, comprenant en outre les étapes consistant à :
obtenir un état de fonctionnement de véhicule au moyen de l'unité de commande de véhicule (5) et déterminer si l'état de fonctionnement de véhicule actuel est un état sûr pour modifier le réglage de l'au moins un élément de compartiment de véhicule (7), ou si l'état de fonctionnement de véhicule actuel est un état dangereux pour modifier le réglage de l'au moins un élément de compartiment de véhicule (7), et
empêcher tout changement de réglage de l'au moins un élément de compartiment de véhicule (7) à moins que l'état de fonctionnement de véhicule actuel ne soit l'état sûr.

13. Procédé selon la revendication 12, dans lequel un état sûr correspond à un véhicule stationnaire ou à un véhicule fonctionnant dans un mode de conduite autonome.
